# EUROPEAN PATENT SPECIFICATION

(11) **EP 2 511 141 B1**
(45) Date of publication and mention of the grant of the patent: **22.01.2014**
(21) Application number: 11162252.8
(22) Date of filing: 13.04.2011
(51) Int. Cl.: B60R 19/34, B62D 21/15, F16F 7/12, B60R 19/26

(54) **Collision energy absorbing device and a method for controlling energy imparted to a vehicle during a collision**
Aufprallenergieabsobierende Vorrichtung und Verfahren zur Steuerung der bei einem Aufprall auf ein Fahrzeug übertragenen Energie
Dispositif d'absorption d'énergie de collision et procédé de contrôle de l'énergie transmise à un véhicule durant une collision

(43) Date of publication of application: 17.10.2012
(73) Proprietor: Volvo Car Corporation, 40 531 Göteborg (SE)
(72) Inventor: Hasselblad, Harald, 43159, Mölndal (SE)

(56) References cited:
- EP-A1- 2 022 682
- WO-A1-01/85527
- WO-A1-2004/113131
- WO-A2-99/15364
- FR-A1- 2 729 198
- US-B1- 6 601 886

## Description

### TECHNICAL FIELD

The present invention relates to a collision energy absorbing device for a vehicle to enable a controlled absorption of energy imparted to a vehicle during a collision with another vehicle or any other object. The present invention also relates to a method for controlling at least parts of the energy imparted to the vehicle with the aid of a collision sensor system and at least one collision energy absorbing device.

### BACKGROUND OF THE INVENTION

Beam structures are used for a number of different applications in vehicles, for example, as the front side members in a passenger vehicle chassis, and are thus components whose design crucially affects the crash safety of the vehicle. In attempting to achieve high crash safety, it has normally been striven for, by a controlled crash sequence, to force as far as possible the elements in the structure to be deformed in the most energy absorbing manner and with an optimum intrusion distance.

Generally for a vehicle there are two tests which frequently are used to evaluate collisions and the subsequent deformation of the beam structure. The first is a front collision test in which the beam structure is evaluated for a more or less symmetrical frontal collision. The second test is an off-set collision test, i.e. a collision with a vehicle or object which strikes the front of the vehicle but essentially to one side of the longitudinal center-plane of the vehicle. Depending on which collision situation that occurs, a safe beam structure requires different properties.

In an offset collision, the deformation beam structure requires great rigidity, since the entire, or most, deformation energy must be absorbed by only a part of the deformation beam structure. In a full frontal collision, the deformation energy is usually distributed between two deformable side members, and the optimum absorption is obtained in this case by reducing the rigidity of the beams. In both cases it is desirable to have a maximum deformation distance, so that the retardation of the vehicle is as slow as possible. The rigidity of the beams dictates the deformation sequence and the energy-absorbing capacity which the deformation structure will absorb. Generally a crumple deformation of a beam will absorb a high amount of energy during a collision and permit a low intrusion of the colliding object into the vehicle. A buckle deformation of a beam will generally absorb a relatively small amount of energy and permits a longer intrusion of the colliding object into the vehicle.

However, regardless of the type of deformation, it remains important to minimize the negative crash effect on the passengers. The distance by which a vehicle is permitted to deform before non-deformable parts intrude into the passenger cabin i.e. the deformation distance, should be kept as long as possible. Therefore, even at a low speed, the impact of a collision may be severe for the passengers if the retardation of the vehicle is very fast and the deformation distance is very short. In the same way, a collision at a high speed may be relatively harmless if the retardation is relatively slow and the deformation distance is relatively long. It is easy to see that these different collision situations require totally different properties of the beam structure in a vehicle. There have been attempts at providing a solution to this problem by providing active beam structures.

Normally, the beam structure in a vehicle is regarded as a passive safety system where it is primarily the geometric shape of the box-shaped beams which, by virtue of their energy-absorbing capacity, determine the collision safety. It is, however, known to arrange an 'active" beam structure in a vehicle, i.e. a system where a collision triggers an activity which makes the beam system perform in a manner exceeding its normal mechanical limits. Such an active beam arrangement is known, e.g. from US 4 050 537. Here, an explosive charge is used to change, in a collision, the cross section of a box beam in such a manner that its rigidity, and thus its energy-absorbing capacity, increases.

In the patent publication of US 2005/0006889 A1 a steering column for a motor vehicle is disclosed. The steering column comprises a column tube which is adapted to absorb energy during an impact action. The energy is absorbed using a chip removal element which cooperates with an energy absorption element. Upon on axial displacement, a chip is carved off from the energy absorption element thus breaking down energy by the chip removal. The position of the chip removal element can further be set using an electric motor thereby changing the amount of energy absorbed during the axial displacement. The behaviour of the steering column can be governed by parameters such as seat settings, accidental speed, and acceleration values. EP 1,079,992 B1 discloses a bumper tor a car which has an energy absorbing function. The bumper has structural elements which are connected by bolts. The bolts are adapted to shear the wall of the surrounding structural elements upon a collision, thus absorbing energy during the collision.

WO 2004/113131 A1 discloses an impact absorbing system in the form of a crash box, especially adapted to protect pedestrians during low speed collisions. The crash box comprises bolts which are arranged to move through apertures in a profile element.

US 6,601,886 B1 discloses an energy absorbing structure which can be used in the bumper mounting on vehicles. The energy absorbing structure comprises a composite tube having one or more impact shoulders and a delamination wedge arranged to cut through the one or more impact shoulders, thereby providing absorption of energy.

WO 99/15364 discloses a multistage bumper allowing gradual deformation upon impact. The bumper is mounted to the vehicle via an arrangement comprising blades which are arranged to cut through one or more stoppers when the bumper is subjected to impact.

### SUMMARY

One problem of the solutions of the prior art is that they do not anticipate that the energy, and thus the force, absorbed by the devices tends to fluctuate when a beam structure collapses during a collision. This is especially the case during crumpling of a beam structure. The energy absorbed is initially high but, when passing a threshold value, it rapidly decreases until the structure has collapsed to a state in which it yet again can absorb energy. In this collapsed, but steady state, the absorbed energy yet again increases to a new threshold value before a second collapse of the structure occurs. A fluctuation of this kind is not very advantageous. A smoother absorption of energy is desired.

It is an object of the present invention to provide a useful alternative to some of the solutions of the prior art, or to provide an improved energy absorbing device for a vehicle. More precisely, the object is met by a collision energy absorbing device for a vehicle adapted to absorb energy in a controlled manner during a collision. The collision energy absorbing device comprises a first member in working cooperation with a second member. The first and the second members are adapted to be relatively displaced upon the collision with respect to each other in a first direction to absorb at least some of the energy imparted to the vehicle during the collision. At least the first member is arranged with a surface adapted to tear through, or cut through, at least a portion of the second member along a first path upon the displacement to effectuate the absorption of the energy during the displacement while said at least a portion of the second member comprises a first section intersecting with the first path. The first section provides a first level of resistance to deformation along the first path different from the level of resistance to deformation upstream of the first section.

Controlled energy absorption with a high reliability is achieved when using the collision energy absorbing device. The first section of the second member which intersects with the first path provides for a predictable change of the resistance to deformation. The collision energy absorbing device can be adapted for specific scenarios and for different positions within the vehicle. A predictable change of the resistance to deformation can be useful e.g. during crumpling of a beam structure. As mentioned above, the energy absorbed is initially high but, when passing a threshold value, it rapidly decreases until the structure has collapsed to a state in which it yet again can absorb energy. Using a collision energy absorbing device, the threshold value can lowered to an appropriate level. Subsequently, a second threshold value can be lowered by providing a second section with a different level of resistance to deformation. The force fluctuations will effectively be removed, or at least reduced, and a smoother absorption of the energy imparted to the vehicle is achieved.

The collision energy absorbing device can be used in a wide verity of positions within the vehicle. For example the collision energy absorbing device can be used between parts of the engine and the beam structure, in the beam structure, in the cargo compartment, in the steering column, etc. It can be used between any parts which can be subjected to collision energy imparted to the vehicle during a collision, which energy needs to be absorbed to minimise injury to the passengers or damage to the vehicle.

To control the amount of absorbed energy, the first section, or other additional sections, adapted to provide for a different resistance to deformation can have physically different forms. The first section can be an aperture, or a recess, in a side wall of the second member for example. It could also be in the form of additional material positioned on the side wall of the second member such material could be steel, or plastic based material or carbon reinforced material. It could also be a portion of increased thickness of the side wall for example wherein such increase may be distinct or continuous.

According to an aspect of the invention, the surface of the first member of the collision energy absorbing device can be formed by at least one energy absorption member. The energy absorbing member can be a part of the first member or attached thereto as a separate component. It can have different dimensions to provide for different levels of energy absorption.

According to an aspect of the invention, the at least one energy absorption member can be displaced between an activated position, in which the at least one energy absorption member is adapted to tear through, or cut through, the second member, and an inactivated position, in which the at least one energy absorption member is disabled from deforming a portion of the second member. A function, similar to an on/off function, can be provided, as too can means for adjustment of the resistance of deformation.

According to an aspect of the invention, the first member comprises a second surface adapted to tear through, or cut through, a portion of the second member along a second path upon the displacement. Optionally, the second member comprises a surface adapted to tear, or cut, through a portion of the first member along a third path upon the displacement.

According to an aspect of the invention, the second member comprises a second section intersecting with the first path adapted to provide for a third level of resistance to deformation. The first path can optionally extend through and beyond the second section.

According to an aspect of the invention, the second member comprises a plurality of apertures, or recesses, arranged to intersect the first path to provide at least two different levels of resistance to deformation along the first path. If a second path for an energy absorbing member is present on the second member, the second member can be arranged with a plurality of apertures, or recesses, arranged to intersect the second path as well. It is of course conceivable that two or more energy absorbing members are adapted to be received by one aperture, or recess, i.e. one section, to provide for the different levels of resistance to deformation.

According to an aspect of the invention, the collision energy absorbing device is adapted to communicate with an electronic control unit, ECU. It can be directly connected thereto or be communicating with the ECU through wire or wire-less communication systems or protocol. This enables the collision energy absorbing device to be changed between an activated state and an inactivated state as a function of a signal from the electronic control unit, to thereby provide for different levels of resistance to deformations and adapt the amount of absorbed energy as the energy absorption member travels along the first path. More specifically, the collision energy absorbing device is adapted to communicate with an electronic control unit, and the at least one energy absorption member is adapted to change between an activated position and an inactivated position as a function of a signal from the electronic control unit. This also enables different numbers of energy absorbing members, i.e. a different amount of surface area, to be exposed to the second member in a controllable manner.

According to an aspect of the invention, the electronic control unit is adapted to communicate with at least one sensor from which the signal is derived. The sensor can be radar or laser operated sensor, for example.

According to an aspect of the invention, the first path, or any other path, can be defined by an indent or a weakened area. It is also possible that the path can be provided with one or more guiding members to guide the energy absorbing member(s) during the displacement.

According to an aspect of the invention, a beam structure for a vehicle comprises at least one collision energy absorbing device.

According to an aspect of the invention, a vehicle comprises a beam structure comprising at least one collision energy absorbing device.

According to an aspect of the invention, the beam structure comprises at least one crash box and at least one beam section adapted for buckle deformation, preferably longitudinal buckle deformation, and in that a collision energy absorbing device is arranged substantially therebetween.

According to a second aspect of the invention, the invention relates to a method for controlling at least some of the energy imparted to a vehicle, the vehicle having a collision sensor system during a collision using at least one collision energy absorbing device. The collision energy absorbing device comprises a first member in working cooperation with a second member. The first and second members are adapted to be relatively displaced upon the collision with respect to each other in a first direction to absorb at least some of the energy imparted to the vehicle during the collision. At least the first member is arranged with a surface adapted to cut, or tear, through a first portion of the second member along a first path upon the displacement to effectuate the absorption of the energy. The at least one portion of the second member comprises a first section intersecting with the first path. The first section provides a first level of resistance to deformation along the first path different from the level of resistance to deformation upstream of the first section, wherein the method comprises the steps of;
- detecting a collision or an imminent collision;
- determining a level of interaction between the surface and the at least one section and;
- setting a level of interaction between the first and second members to enable an appropriate level of resistance to deformation along the first path.

According to an aspect, the at least one surface of the first member is arranged on at least one energy absorption member. The level of interaction between the first and the second members is set by activating or deactivating the at least one energy absorbing member.

### BRIEF DESCRIPTION OF THE DRAWINGS

Embodiments of the present invention will be described in greater detail with reference to the accompanying figures in which;
figure 1 shows a vehicle in the form of an automobile comprising a collision energy absorbing device according to an embodiment of the present invention;
figure 2 shows parts of a beam structure of the vehicle in figure 1;
figures 3a-3b show parts of a collision energy absorbing device according to an embodiment of the present invention;
figures 4a-4c shows parts of the collision energy absorbing device from figures 3a-3b during different stages of a collision;
figure 5 shows a force - time/distance diagram of absorbed energy during different stages of a collision and;
figure 6 shows a block diagram of a method for controlling at least some of the energy imparted to the vehicle in figure 1.

### DETAILED DESCRIPTION OF PREFERRED EMBODIMENTS

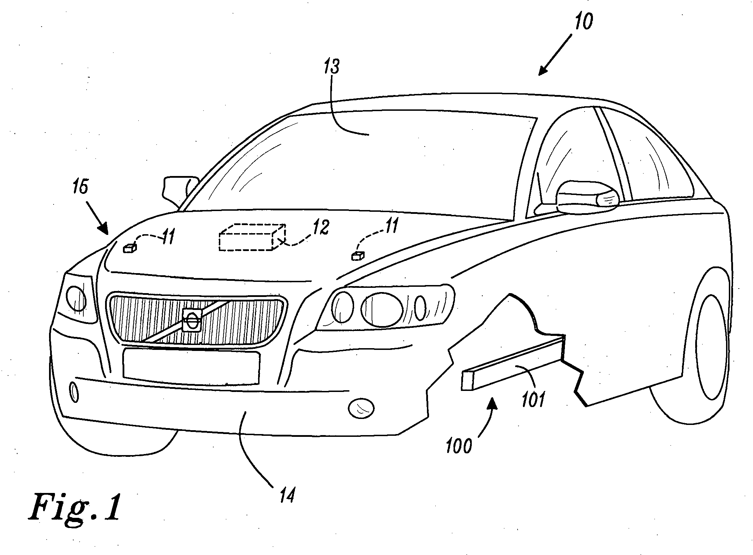

Figure 1 shows a vehicle 10, in the form of a car, comprising a beam structure 100 which during collision is intended to deform so as to partly, or fully, absorb the collision energy. In the shown non limiting embodiment, the vehicle 10 is arranged with at least one sensor 11, in this case two sensors 11, forming part of a collision sensor system. The sensors 11 communicate with an electronic control unit, ECU, in this case an onboard computer 12 of the vehicle 10. During a collision, or just before collision, the sensors 11, or any other appropriate and useable sensor system in the vehicle, reports to the computer 12 of the ongoing or imminent collision. The computer 12 analyses the input and thereafter initiates appropriate counter measures depending on the result of the analysis. One such counter measure can be a modification of the rigidity of at least parts of the beam structure 100 so that the collision energy is absorbed in a controlled manner, e.g. at the right moment and with an appropriate level of the amount of energy absorbed during the collision.

The vehicle 10 comprises a passenger compartment 13 which comprises seats for a driver and for additional passengers. As used herein, the term "passenger" is meant to include the driver of the vehicle 10. A bumper 14 is arranged at the front 15 of the vehicle.

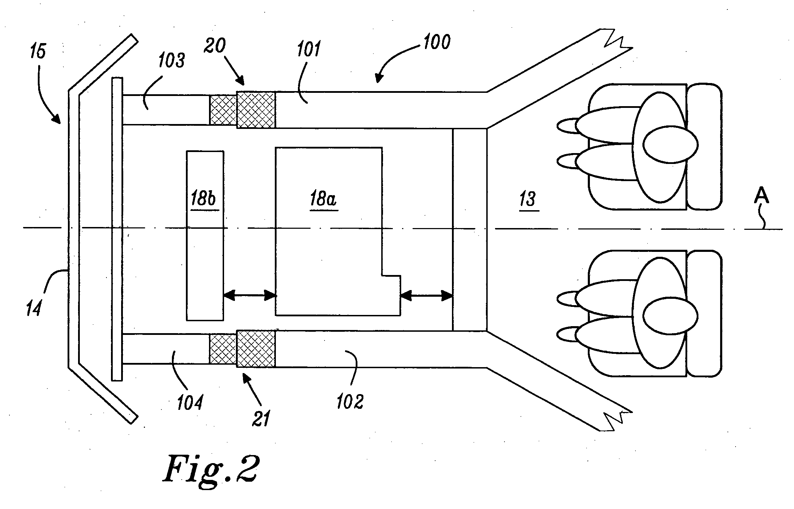

The beam structure 100 can comprise a first and a second deformation beam 101, 102, as shown in figure 2 from above. The first and the second deformation beams 101, 102 are arranged substantially parallel and longitudinal with the vehicle 10, extending substantially from the passenger compartment 13 to the proximity of the front 15 of the vehicle 10. In the shown embodiment, the first and the second deformable beams 101, 102 extend along the longitudinal sides of the vehicle, inwardly of the wheel houses (not shown). An engine, formed by engine parts 18a, 18b, is arranged between the bumper 14 and the passenger compartment 13.

A first and a second crash box 103, 104 are arranged on the first and the second deformation beam 101, 102 respectively, between the first and the second deformation beam 101, 102 and the bumper 14. During low speed collisions, the first and the second crash boxes 103, 104 are adapted to brace a majority of the impact during a collision in the direction of a longitudinal axis A of the vehicle 10 by crumpling so that a minimum amount of damage to the vehicle 10 is sustained. This is because the reparation cost is intended to be as low as possible for the owner of the vehicle. However, in case of a high speed collision, the first and second deformable beams 101, 102 are intended to brace a majority of the energy from the collision so that a minimum of injury is imparted to the passengers of the vehicle 10. The reparation cost is, in this kind of a collision, not a priority. The available deformation distance is indicated by the arrows between the engine parts 18a, 18b. The deformation distance is intended to visualize the distance which the vehicle can be deformed, substantially without intrusion of objects into the passenger compartment 13.

Figure 2 also shows a first and a second collision energy absorbing device 20, 21. It should be noted that at least one, or all, of the first and the second deformable beams 101, 102 and the first and the second crash boxes 103, 104 can be arranged with a collision energy absorbing device 20 as described herein. The collision energy absorbing device 20 can also, or optionally, be arranged at other positions within the vehicle, for example between one of the engine parts 18a, 18b to absorb energy from a collision. In figure 2, a first and a second collision energy absorbing device 20, 21 are arranged between the first and the second crash boxes 103, 104 and the first and the second deformable beams 101, 102 respectively.

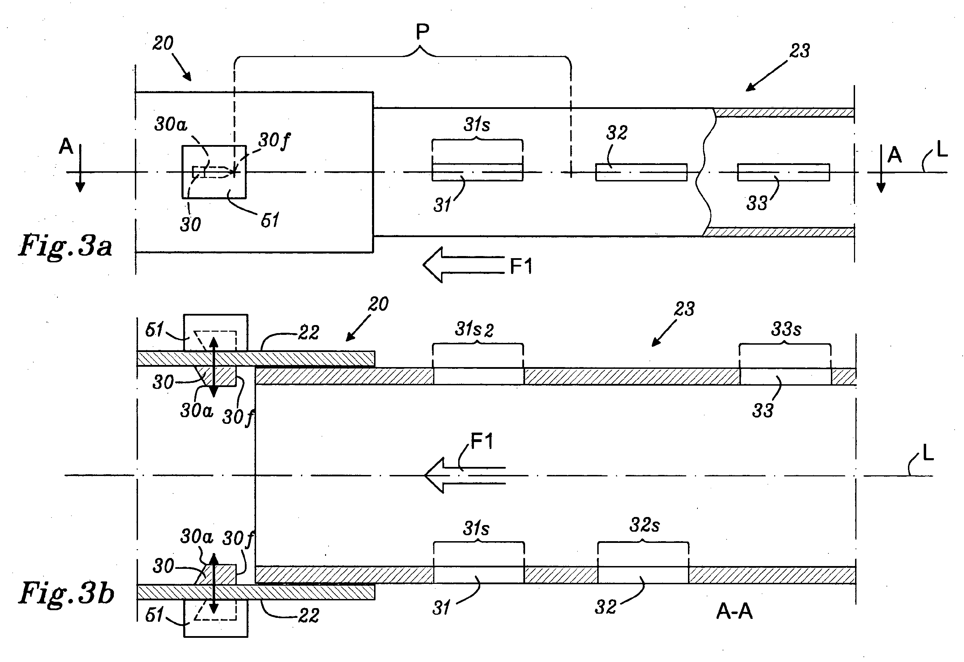

Figure 3a shows a schematic view of the first collision energy absorbing device 20 from figure 2 having a longitudinal centre line L. The collision energy absorbing device 20 comprises a first and a second member 22, 23 displacebly arranged with respect to each other. As is shown in figures 3a-3b, the second member 23 is adapted to be received by the first member 22 in a telescopic manner; however other configurations are possible. The first and the second member 22, 23 can be connected in different ways; they can be welded together by a weld adapted to rupture at a predetermined force, adhered, or mechanically connected directly or indirectly, for example. It is also possible that the first and the second member 22, 23 are simply positioned substantially adjacent each other. The second member 23 is adapted to be displaced upon sudden retardation of the vehicle 10, such as collisions, with respect to the first member 22 in a first direction indicated by the arrow F1 in figures 3a-3b. Optionally, the first member can be displaced in the opposite direction of the arrow F1. Upon displacement, the collision energy absorbing device 20 is adapted to absorb at least some of the energy imparted to the vehicle 10 during the sudden retardation.

The first member 22, which can be a part of the first beam 101 for example, has a surface 30f, in this case in the form of an energy absorption member 30. The surface 30f cuts through the second member upon displacement. During the cut, the surface 30f is subjected to a cutting resistance, generally referred to as a resistance to deformation. A second energy absorbing member 30a is, in the shown embodiment, provided substantially on the opposite side of the first member 22 with respect to a longitudinal centre line L. The first member 22 can comprise a plurality of energy absorption members 30, such as at least two, at least 3 or at least 4. The energy absorption member 30 is as mentioned adapted to cut, or tear, through at least a portion of the second member 23 along a first path P-P, indicated by the line P-P in figures 3a-3b, upon displacement of the first member 22 with respect to the second member 23.

By the term "path" herein is meant a distance having a defined start, optionally a defined stop, and a defined or predetermined travelling route. The effect of the above mentioned cut will be described in greater detail below.

To provide a controlled energy absorption during a collision, the second member 23 comprises a section 31s adapted to provide for a different resistance to deformation. In this embodiment, the second member 23 comprises a side wall 24 with an aperture 31. The absorbed energy is changed by changing the resistance of the energy absorbing member 30 when travelling through the second member 23, in this case the resistance is decreased to zero as the energy absorbing member enters the aperture 31 of the second member. The aperture 31 extends through the full thickness of the side wall 24 of the second member 23. Optionally, the aperture 31 can be replaced or supplemented with at least one recess providing the change of resistance to deformation.

The aperture 31, i.e. a first section, is positioned to intersect the first path P-P, as can be seen in figure 3a. The energy absorption member 30 is thus adapted to travel through a portion, or a part, of the second member, through the aperture 31, and thereafter through another portion of the second member 23, when travelling along the path P-P. This promotes a temporarily change of the resistance to deformation, and thus exposes the energy absorption member 30 of the absorbing device 20 to different sections with different levels of resistance to deformation. The difference between the levels of resistance to deformation is in this manner distinct. Further, once the energy absorbing member 30, with the surface 31 f, is aligned with aperture 31, i.e. the section 31 s, the amount of the absorbed energy will be very predictable and there is a low risk that the prediction is inaccurate as the temporarily change of absorbed energy is due to purely physical properties of the second member 23, i.e. the section 30s.

As is noted in figure 3b, the second member can be provided with a plurality of sections 31 s, 32s, 33s, to provide a plurality of different levels of resistance to deformation, through the energy absorption members 30, 30a. As is noted, the sections 31 s, 32s, 33s, are offset with respect to the longitudinal centre line L. In an embodiment, the second member 23 comprises a plurality of sections providing at least two different levels of resistance to deformation.

In an embodiment, at least two sections 31 s, 31 s2 are not offset with respect to the longitudinal centre line L, i.e. they are symmetrically arranged with respect to the longitudinal centre line L. One such optional section 31 s2 is indicated in figure 3b arranged directly opposite of the longitudinal centre line L, opposite to the section 31s on the opposing side wall of the second member 23.

The cross section of the first and the second members can have a variety of different forms; oval, circular, squared, rectangular, polygonal or similar for example. In figures 3a-3b the cross sections are rectangular.

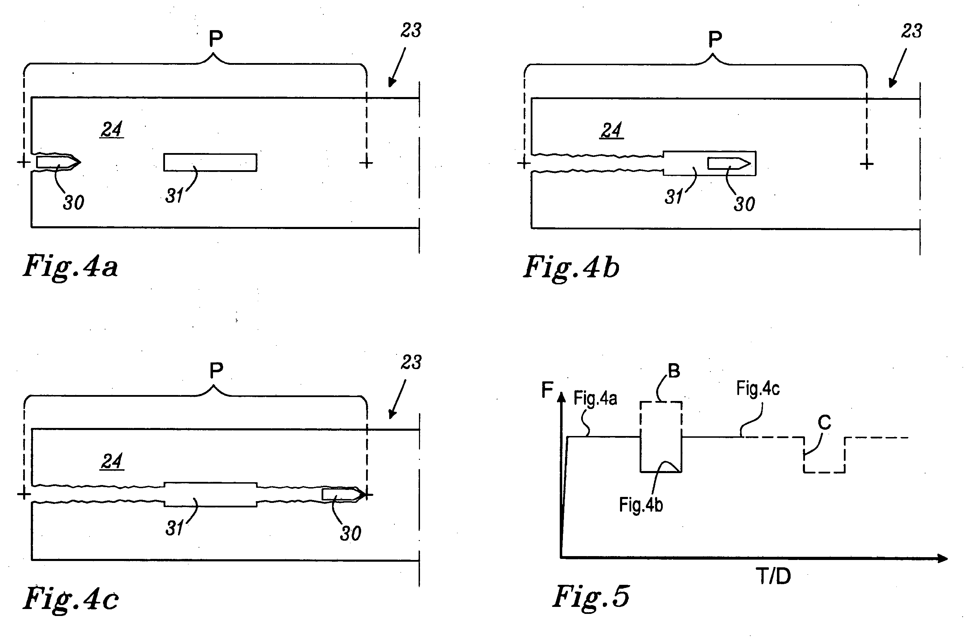

Figures 4a-4c show the collision energy absorbing device 20 at different stages during a collision to illustrate the function of the collision energy absorbing device 20. To further illustrate the function of the collision energy absorbing device 20, reference will also be made to figure 5 showing a force-time/distance diagram. The time/distance axis represents the time after collision and the relative displacement between the first and the second members 22, 23 (using length units).

Figure 4a shows the second member 23 with the aperture 31 from the side as illustrated in figure 3a. Before the collision, the first and the second members 22, 23 are arranged as shown in figure 3a, i.e. the energy absorbing member 30 of the first member 22 has not yet started to cut the second member 23. However, when the vehicle 10 collides, the first member 22 will be displaced with respect to the second member 23 during which the impact energy will be at least partly absorbed by the energy absorbing device 20. The energy absorbing member 30 of the first member 22 will start to cut through a portion of the side wall 24 of the second member 23. During the cut, the energy absorbing member 30 will absorb an amount of energy imparted to the vehicle 10 during the collision by the force required to cut through the second member, i.e. due to the level of resistance to deformation, or cutting resistance in this case.

In Figure 5, the sequence is illustrated by the graph with the perceived resistance force F of the energy absorbing device 20 on the Y-axis, and the time/distance T/D that the first and the second members 22, 23 have been relatively displaced on the X-axis. For the sake of clarity, the relevant figures are indicated in figure 5 at their shown positions in figures 4a-4c.

As the energy absorbing member 30 of the first member 22 is continuously displaced along the path P-P, the energy absorbing member 30 enters the void defined by the aperture 31 of the second member 23 as shown in figure 4b. The absorbed force, i.e. the resistance F drops instantly as is shown in figure 5 and is maintained at a level which is defined by the force absorbed by the energy absorbing device 20 without using the energy absorbing member 30. As the energy absorbing member 20 again starts to cut the side wall 24 of the second member 23, the absorbed force instantly increases, as shown in figure 5.

In cases where the change the level of resistance is due to an increased thickness of the side wall 24 of the second member, e.g. due to an added strip of material, (instead of the aperture 31 for example), there will be a sudden increase in resistance to deformation. This is illustrated with the dotted line B in figure 5.

If there are a plurality of apertures, such as the aperture 31 of the second member 23, the force F will continue to increase and decrease in a step wise manner as indicated by the dotted line C in figure 5. By varying the length of the aperture 31, or any other apertures, the level of resistance, and thus the absorbed energy, can be tailored to the appropriate levels.

As an option it is possible to have apertures of different lengths to adjust the amount of energy absorbed. The dimension of the energy absorbing member, the cutting edge of the energy absorbing member 30, the thickness of the side wall 24 of the second member 23, etc can be changed or adjusted in various ways. The number of apertures or energy absorbing members can of course be manipulated to achieve the desired results. It is thus possible to provide for controlled energy absorption, and controlled energy absorption sequences, using physical modification of the second member 23.

To actively control the energy absorption during a collision, the collision energy absorbing device 20 can be provided with, or adapted to cooperate with, an electronic control arrangement 50. The electronic control arrangement 50 comprises an electronic control unit, hereafter referred to as ECU. The ECU can be an onboard vehicle computer, such as the computer 12, illustrated in figure 1 for example. The ECU cooperates with an energy absorption member activator 51, in this case a solenoid switch, which is adapted to activate or deactivate the energy absorption member 30. In the shown embodiment, this is achieved by retracting or extracting the energy absorption member 30 into alignment with the path P-P, as indicated in figures 3a-3b. In figures 3a-3b, the energy absorbing member 30 is shown in its activated position, i.e. in a position in which it is aligned with the path P-P. The deactivated position of the energy absorbing member 30 is shown with dotted lines to illustrate how the energy absorbing member 30 has been retracted into the energy absorption member activator 51 and thus deactivated.

In cases where an energy absorbing member needs to be activated, this can be achieved using activation means; such means may comprise chemical, electrical, mechanical and/or thermal means. Examples of such means are pyrotechnical charges, electromagnetic couplings, e.g. a solenoid switch, biasing means, e.g. a spring and adhesive which can change its adhesive properties, e.g. depending on heat exposure, to thereby active at least one energy absorbing member. Optionally, the second member can be displaced in such a manner that at least section adapted to change the level of resistance to deformation, e.g. at least one aperture, or recess, is exposed to the intended path of the energy absorbing member. For example, if the cross sections of the first and the second members 22, 23 of the collision energy absorbing device 20 are circular, the second member 23 can be rotated with respect to the first member 22 to expose different numbers of apertures, or recesses, to the energy absorbing member(s) of the first member 22 of the collision energy absorbing device 20.

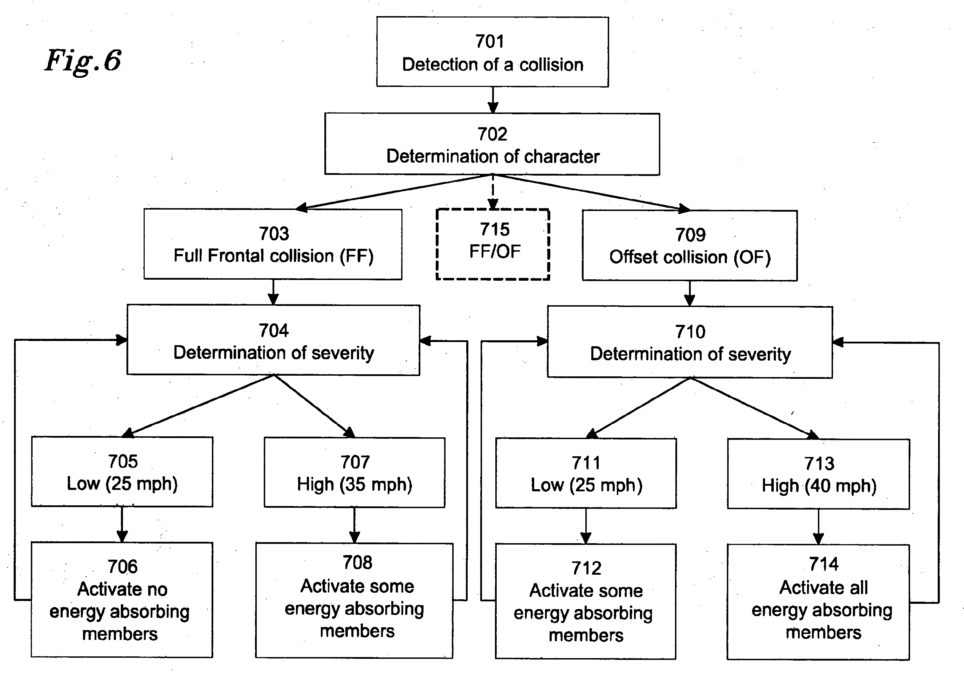

As is shown in the flow chart of figure 6, the first step is to detect whether or not a collision is imminent or occurring. Secondly, the character of the collision needs to be determined. These steps are preferably performed by a control unit such as a vehicle computer connected to e.g. a gyro, a retardation speed sensor, a laser distance sensor, photocell sensor, etc, or combinations thereof. A collision sensor system which can be employed is described in the publications of WO 98/22327 and WO 01/85527 for example. The computer 12 of the vehicle 10, based on the signals from at least one sensor 11, determines the collision speed (i.e. the delta speed), determines the position of the collision point, compares the calculated values with programmed values, and if necessary sends signals to activate or deactivate the collision energy absorbing device by activating an appropriate number of energy absorbing members and/or by positioning an appropriate number of sections adapted to change the level of resistance to deformation, such as an appropriate number of apertures, or recesses, in the path of travel of the energy absorbing members.

Further in figure 6 (with some references to figure 1), the box indicated as 701 represents the at least one sensor 11 of the vehicle 10, as illustrated in figure 1, arranged to detect a collision or an imminent collision. The sensor 11 is in communication with the computer 12 of the vehicle 10, which interprets and analyses the signal from the sensor 11; the step is represented by box 702. Depending on the result of the analysis, the computer 12 categorises the result as a full frontal collision 703 (FF), an offset collision 709 (OF) or as a collision which falls between these two collision types 715 (FF/OF), indicated by the dotted lines.

In other embodiments, the sensor 11 may be arranged to detect rear collisions, side collisions or other types of collisions or collision scenarios. However, for the sake of clarity, an embodiment of the present invention is described with reference to a front beam structure and a full frontal collision scenario and an offset collision scenario, although, as mentioned, other collision characteristics are possible.

After the type, or character, of the collision has been determined, the severity of the collision is determined 704, 710. The severity of the collision is determined by the input from the different sensors 11 of the vehicle 10 and by comparing the input signals with pre-programmed values in the vehicle computer 12. The determination of the severity can as an example be based on the weight of the vehicle 10 and the speed of the vehicle 10 just before collision, the relative velocity of the vehicle 10 and the colliding object (delta speed), the time it takes for a colliding object to reach a specified point along the vehicle body, i.e. the intrusion distance of the colliding object, the triggering of a certain combination of sensors, the powertrain of the vehicle, the passengers seat position, driving direction of the vehicle, passenger information such as weight of the passenger, status of safety belts, or the like.

In cases where a full frontal collision 703 is revealed, the computer 12 determines whether the severity of the collision is to be identified as low or high 705, 707. If the severity is determined as high 707, e.g. by means of the delta speed equal to 35 mph, the computer determines that a large amount of energy absorbing members are to be activated, e.g. 10 or more. The just mentioned collision situation is typical for a USNCAP collision test.

Before the energy absorbing members are activated, the beam structure 100 and both the first and the second deformable beam 101, 102 as shown in figure 1, will be configured to withstand a threshold value of energy before a crumple deformation occurs, in this case at the beginning of the collision. When the energy absorbing members are activated, the crumple deformation can be controlled during the collision. By using apertures, or recesses, which at predetermined positions changes the resistance to deformation, and thus the energy that can be absorbed, the crumple deformation can be controlled using inactive means, i.e. the aperture, or recess, does not require to be activated per se and provides for predictable results.

When both the first and the second deformable beams 101, 102 are engaged, the intrusion risk is deemed to be lower than if only one deformable beam is engaged. The energy absorbing members are activated at a precise point in time which permits the beam structure and the deformable beams to absorb a maximum amount of energy but at the same time provide a safe retardation of the vehicle. Generally, during a full frontal collision, intrusion of the colliding object is not a high risk factor. Instead the crash pulse imparted by the collision is a significant factor for imparting injuries to the passengers. Due to the collision energy absorbing device, it is believed that the crash pulse through the vehicle 10 can be controlled; this can reduce the negative effects from the crash on any passenger present in the vehicle 10.

If a full frontal collision 703 is revealed and the severity is determined 704 to be low, for instance by means of the speed of the vehicle 10 being equal to 25 mph, the computer 12 does not activate any of the absorbing energy members. At this kind of collision, i.e. with low severity and a full frontal collision, and since both the first and the second deformable beams will be engaged, the intrusion risk is low. The beam structure 100 is exposed to a low force and a low pulse. The deformable beams 101, 102 will exhibit small crumple and a majority of buckle deformation.

In cases where an offset collision 709 is revealed, one single deformable beam is intended to absorb substantially the same amount of kinetic energy as both the deformable beams would during a frontal collision, as described above. The crash severity in this kind of collision is generally high. In these cases the intrusion risk is very high, due to the high force imparted on one deformable beam. Much crumple and no buckle of the deformable beam is desirable. If the crash severity is determined to be high, e.g. by means of the delta speed of the vehicle being equal to (or higher than) 40 mph, all the energy absorbing members are activated. The just mentioned collision situation is typical for a EuroNCAP collision test. A large amount of energy can be absorbed by the deformable beam while still offering protection from long intrusion of the colliding object.

If the severity is determined 710 to be low 711, only some of the energy absorbing members are activated so as to permit controlled energy absorption.

As a subsequent step, the computer 12 determines, as a function of the input from the sensors 11 of the vehicle 12, whether there is a need to adjust the activated energy absorbing members. For example, the degree of severity could have been wrongly calculated and the number of energy absorbing members needs to be increased. Hence according to an aspect of the invention, the activity of the collision energy absorbing device can be adjusted after a collision has occurred. In other terms, the interaction between the first and the second members 22, 23 can be changed by activating or deactivating a selected numbers of energy absorbing members during the actual collision. This function is indicated by the arrow returning from the boxes 706, 708, 712, 714 to the boxes 704, 710. A very clear example of this kind of situation is when several vehicles collide, i.e. multiple collisions. At first, a first collision severity is determined with respect to a first colliding vehicle. Subsequently a second vehicle collides and a second collision severity needs to be determined.

Although not shown in figure 6, any number of energy absorbing members can of course also be deactivated as a function of the determined severity in the boxes 704, 710. It may also be that no change of the interaction between the first and the second members 22, 23 is required.

## Claims

1. A collision energy absorbing device (20) for a vehicle (10), said collision energy absorbing device (20) being adapted to absorb energy in a controlled manner during a collision, said collision energy absorbing device (20) comprising a first member (22) in working cooperation with a second member (23),
said first and second members (22, 23) being adapted to be relatively displaced upon said collision with respect to each other in a first direction to absorb at least some of said energy imparted to said vehicle (10) during said collision,
at least said first member (22) being arranged with a surface (30f) adapted to cut, or tear, through at least a portion of said second member (23) along a first path (P-P), said surface (30f) of said first member (22) being subjected to a level of resistance to deformation to effectuate said absorption of said energy during said displacement,
said at least a portion of said second member (23) comprises a first section (31s) intersecting with said first path (P-P), and said first section (31s) provides a first level of resistance to deformation along said first path (P-P) different from the level of resistance to deformation upstream of said first section (31s),
wherein said second member (23) comprises a second section (32s) intersecting with said first path (P-P) providing a second level of resistance to deformation along said first path (P-P), different from the level of resistance to deformation upstream of said first section,
**characterized in that**
said first section (31s) and said second section (32s) are arranged such that a perceived resistance force (F) of the energy absorbing device (20) will increase and decrease in a stepwise manner when the energy absorbing member (30) travels through the second member (23).

2. The collision energy absorbing device (20) according to claim 1, wherein said first path (P-P) extends through and beyond said first section (30s) of said second member (23).

3. The collision energy absorbing device (20) according to claim 1 or 2, wherein said second member (23) comprises a side wall (24) and in that said first section (30s) of said second member (23) is an aperture (31), or a recess, in said side wall (24).

4. The collision energy absorbing device (20) according to the claims 1 or 2, wherein said second member (23) comprises a side wall (24) and in that said first section of said second member (23) is a portion of increased thickness of said side wall (24).

5. The collision energy absorbing device (20) according any of the preceding claims, wherein said surface (30f) of said first member (22) is formed by at least one energy absorption member (30), said at least one energy absorption member (30) being adapted to be displaced between an activated position, in which said at least one energy absorption member (30) is adapted to cut, or tear, through said second member (23), and an inactivated position in which said at least one energy absorption member (30) is disabled from deforming said second member (23).

6. The collision energy absorbing device (20) according to claim 6, wherein said collision energy absorbing device (20) is adapted to communicate with an electronic control unit (50), and in that said at least one energy absorption member (30) is adapted to be displaced between said activated position and said inactivated position as a function of a signal from said electronic control unit (50).

7. The collision energy absorbing device (20) according to any of the preceding claims, wherein said second member (23) comprises a plurality of apertures (31, 32, 33), or recesses, arranged to intersect said first path (P-P), providing at least two different levels of resistance to deformation along said first path (P-P).

8. The collision energy absorbing device (20) according to any of the preceding claims, wherein said first path (P-P) is defined by an indent or a weakened area of said second member (23).

9. The collision energy absorbing device (20) according to any of the preceding claims, wherein said first member (22) comprises a second surface (30f) adapted to cut, or tear, through at least a portion of said second member (23) along a second path upon said displacement.

10. The collision energy absorbing device (20) according to any of the preceding claims, wherein said first direction and said first path (P-P) are parallel.

11. A beam (100) structure for a vehicle (10) comprising at least one collision energy absorbing device (20) according to any of the preceding claims.

12. A vehicle (10) comprising the beam structure (100) of claim 11.

13. A method for controlling at least some of the energy imparted to a vehicle (10) having a collision sensor system during a collision using at least one collision energy absorbing device (20), said collision energy absorbing device (20) comprising a first member (22) in working cooperation with a second member (23),
said first and second members (22, 23) being adapted to be relatively displaced upon said collision with respect to each other in a first direction to absorb at least some of said energy imparted to said vehicle (10) during said collision,
at least said first member (22) being arranged with a surface (30f) adapted to cut, or tear, through a first portion of said second member (23) along a first path (P-P) upon said displacement, said surface (30f) of said first member (22) being subjected to a level of resistance to deformation to effectuate said absorption of said energy during said displacement,
said at least one portion of said second member (23) comprising a first section (31s) intersecting with said first path (P-P), said first section (31s) providing a first level of resistance to deformation along said first path (P-P) different from the level of resistance to deformation upstream of said first section (31s),
wherein said second member (23) comprises a second section (32s) intersecting with said first path (P-P) providing a second level of resistance to deformation along said first path (P-P), different from the level of resistance to deformation upstream of said first section (31 s),
wherein said first section (31 s) and said second section (32s) are arranged such that a perceived resistance force (F) of the energy absorbing device (20) will increase and decrease in a stepwise manner when the energy absorbing member (30) travels through the second member (23),
wherein
said method comprises the steps of;
- detecting a collision or an imminent collision;
- determining a level of interaction between said surface (30f) and said at least one section (31 s, 32s, 33s) and;
- setting a level of interaction between said first and second members (22, 23) to enable an appropriate level of resistance to deformation along said first path (P-P).

14. The method according to claim 13, wherein said surface (30f) of said first member (22) is arranged on at least one energy absorption member (30), said level of interaction between said first and second members (22, 23) being set by activating or deactivating said at least one energy absorbing member (30, 30a).

## Patentansprüche

1. Zusammenstoßenergie absorbierende Vorrichtung (20) für ein Fahrzeug (10), wobei die Zusammenstoßenergie absorbierende Vorrichtung (20) dazu ausgeführt ist, während eines Zusammenstoßes Energie auf kontrollierte Weise zu absorbieren, wobei die Zusammenstoßenergie absorbierende Vorrichtung (20) ein erstes Glied (22) umfasst, das mit einem zweiten Glied (23) zusammenwirkt,
wobei das erste und zweite Glied (22, 23) dazu ausgeführt sind, bei dem Zusammenstoß zum Absorbieren mindestens eines Teils der während des Zusammenstoßes auf das Fahrzeug (10) übertragenen Energie bezüglich einander in einer ersten Richtung relativ verschoben zu werden,
wobei mindestens das erste Glied (22) mit einer Fläche (30f) ausgestattet ist, die dazu ausgeführt ist, durch mindestens einen Teil des zweiten Glieds (23) entlang einer ersten Bahn (P-P) zu schneiden oder reißen, wobei die Fläche (30f) des ersten Glieds (22) zum Bewirken der Absorption der Energie während der Verschiebung einem Grad an Verformungswiderstand ausgesetzt ist,
wobei der mindestens eine Teil des zweiten Glieds (23) einen ersten Abschnitt (31s) umfasst, der die erste Bahn (P-P) schneidet, und der erste Abschnitt (31s) einen ersten Grad an Verformungswiderstand entlang der ersten Bahn (P-P) bereitstellt, der vom Grad des Verformungswiderstands stromaufwärts des ersten Abschnitts (31s) verschieden ist,
wobei das zweite Glied (23) einen zweiten Abschnitt (32s) umfasst, der die erste Bahn (P-P) schneidet und einen zweiten Grad an Verformungswiderstand entlang der ersten Bahn (P-P) bereitstellt, der vom Grad des Verformungswiderstands stromaufwärts des ersten Abschnitts verschieden ist,
**dadurch gekennzeichnet, dass**
der erste Abschnitt (31s) und der zweite Abschnitt (32s) derart angeordnet sind, dass sich eine wahrgenommene Widerstandskraft (F) der Energie absorbierenden Vorrichtung (20) stufenweise erhöht oder verringert, wenn sich das Energie absorbierende Glied (30) durch das zweite Glied (23) bewegt.

2. Zusammenstoßenergie absorbierende Vorrichtung (20) nach Anspruch 1, wobei sich die erste Bahn (P-P) durch den ersten Abschnitt (30s) des zweiten Glieds (23) und darüber hinaus erstreckt.

3. Zusammenstoßenergie absorbierende Vorrichtung (20) nach Anspruch 1 oder 2, wobei das zweite Glied (23) eine Seitenwand (24) umfasst und der erste Abschnitt (30s) des zweiten Glieds (23) eine Öffnung (31), oder eine Ausnehmung, in der Seitenwand (24) ist.

4. Zusammenstoßenergie absorbierende Vorrichtung (20) nach Anspruch 1 oder 2, wobei das zweite Glied (23) eine Seitenwand (24) umfasst und der erste Abschnitt des zweiten Glieds (23) ein Teil der Seitenwand (24) mit größerer Dicke ist.

5. Zusammenstoßenergie absorbierende Vorrichtung (20) nach einem der vorhergehenden Ansprüche, wobei die Fläche (30f) des ersten Glieds (22) durch mindestens ein Energie absorbierendes Glied (30) gebildet wird, wobei das mindestens eine Energie absorbierende Glied (30) dazu ausgeführt ist, zwischen einer aktivierten Position, in der das mindestens eine Energie absorbierende Glied (23) zum Schneiden oder Reißen durch das zweite Glied (23) ausgeführt ist, und einer inaktivierten Position, in der eine Verformung des zweiten Glieds (23) durch das mindestens eine Energie absorbierende Glied (30) deaktiviert ist, verschoben zu werden.

6. Zusammenstoßenergie absorbierende Vorrichtung (20) nach Anspruch 5, wobei die Zusammenstoßenergie absorbierende Vorrichtung (20) dazu ausgeführt ist, mit einem elektronischen Steuergerät (50) zu kommunizieren, und das mindestens eine Energie absorbierende Glied (30) dazu ausgeführt ist, in Abhängigkeit von einem Signal von dem elektronischen Steuergerät (50) zwischen der aktivierten Position und der inaktivierten Position verschoben zu werden.

7. Zusammenstoßenergie absorbierende Vorrichtung (20) nach einem der vorhergehenden Ansprüche, wobei das zweite Glied (23) mehrere Öffnungen (31, 32, 33), oder Ausnehmungen, umfasst, die so angeordnet sind, dass sie die erste Bahn (P-P) schneiden, wodurch mindestens zwei verschiedene Grade an Verformungswiderstand entlang der ersten Bahn (P-P) bereitgestellt werden.

8. Zusammenstoßenergie absorbierende Vorrichtung (20) nach einem der vorhergehenden Ansprüche, wobei die erste Bahn (P-P) durch eine Vertiefung oder einen geschwächten Bereich des zweiten Glieds (23) definiert ist.

9. Zusammenstoßenergie absorbierende Vorrichtung (20) nach einem der vorhergehenden Ansprüche, wobei das erste Glied (22) eine zweite Fläche (30f) umfasst, die dazu ausgeführt ist, bei der Verschiebung durch mindestens einen Teil des zweiten Glieds (23) entlang einer zweiten Bahn zu schneiden oder reißen.

10. Zusammenstoßenergie absorbierende Vorrichtung (20) nach einem der vorhergehenden Ansprüche, wobei die erste Richtung und die erste Bahn (P-P) parallel verlaufen.

11. Trägerstruktur (100) für ein Fahrzeug (10), die mindestens eine Zusammenstoßenergie absorbierende Vorrichtung (20) nach einem der vorhergehenden Ansprüche umfasst.

12. Fahrzeug (10), das die Trägerstruktur (100) von Anspruch 11 umfasst.

13. Verfahren zur Steuerung mindestens eines Teils der während eines Zusammenstoßes auf ein ein Kollisionssensorsystem enthaltendes Fahrzeug (10) übertragenen Energie unter Verwendung mindestens einer Zusammenstoßenergie absorbierenden Vorrichtung (20), wobei die Zusammenstoßenergie absorbierende Vorrichtung (20) ein erstes Glied (22) umfasst, das mit einem zweiten Glied (23) zusammenwirkt, wobei das erste und zweite Glied (22, 23) dazu ausgeführt sind, bei dem Zusammenstoß zum Absorbieren mindestens eines Teils der während des Zusammenstoßes auf das Fahrzeug (10) übertragenen Energie bezüglich einander in einer ersten Richtung relativ verschoben zu werden,
wobei mindestens das erste Glied (22) mit einer Fläche (30f) ausgestattet ist, die dazu ausgeführt ist, bei der Verschiebung durch einen ersten Teil des zweiten Glieds (23) entlang einer ersten Bahn (P-P) zu schneiden oder reißen, wobei die Fläche (30f) des ersten Glieds (22) zum Bewirken der Absorption der Energie während der Verschiebung einem Grad an Verformungswiderstand ausgesetzt ist,
wobei der mindestens eine Teil des zweiten Glieds (23) einen ersten Abschnitt (31s) umfasst, der die erste Bahn (P-P) schneidet, wobei der erste Abschnitt (31s) einen ersten Grad an Verformungswiderstand entlang der ersten Bahn (P-P) bereitstellt, der vom Grad des Verformungswiderstands stromaufwärts des ersten Abschnitts (31s) verschieden ist,
wobei das zweite Glied (23) einen zweiten Abschnitt (32s) umfasst, der die erste Bahn (P-P) schneidet und einen zweiten Grad an Verformungswiderstand entlang der ersten Bahn (P-P) bereitstellt, der vom Grad des Verformungswiderstands stromaufwärts des ersten Abschnitts (31s) verschieden ist,
wobei der erste Abschnitt (31s) und der zweite Abschnitt (32s) derart angeordnet sind, dass sich eine wahrgenommene Widerstandskraft (F) der Energie absorbierenden Vorrichtung (20) stufenweise erhöht oder verringert, wenn sich das Energie absorbierende Glied (30) durch das zweite Glied (23) bewegt,
wobei das Verfahren die folgenden Schritte umfasst:
- Erfassen eines Zusammenstoßes oder eines unmittelbar bevorstehenden Zusammenstoßes;
- Bestimmen eines Zusammenwirkungsgrads zwischen der Fläche (30f) und dem mindestens einen Abschnitt (31s, 32s, 33s); und
- Einstellen eines Zusammenwirkungsgrads zwischen dem ersten und zweiten Glied (22, 23), um einen angemessenen Grad an Verformungswiderstand entlang der ersten Bahn (P-P) zu ermöglichen.

14. Verfahren nach Anspruch 13, wobei die Fläche (30f) des ersten Glieds (22) auf mindestens einem Energie absorbierenden Glied (30) angeordnet ist, wobei der Zusammenwirkungsgrad zwischen dem ersten und zweiten Glied (22, 23) durch Aktivieren oder Deaktivieren des mindestens einen Energie absorbierenden Glieds (30, 30a) eingestellt wird.

## Revendications

1. Dispositif d'absorption d'énergie de collision (20) pour un véhicule (10), ledit dispositif d'absorption d'énergie de collision (20) étant adapté pour absorber l'énergie de manière contrôlée lors d'une collision, ledit dispositif d'absorption d'énergie de collision (20) comprenant un premier organe (22) en coopération fonctionnelle avec un second organe (23),
lesdits premier et second organes (22, 23) étant adaptés pour être déplacés de manière relative l'un par rapport à l'autre lors de ladite collision dans une première direction afin d'absorber au moins une partie de ladite énergie transmise audit véhicule (10) lors de ladite collision,
au moins ledit premier organe (22) étant conçu avec une surface (30f) adaptée pour couper, ou déchirer, au moins une partie dudit second organe (23) le long d'un premier trajet (P-P), ladite surface (30f) dudit premier organe (22) étant soumise à un certain niveau de résistance à la déformation afin de réaliser ladite absorption de ladite énergie lors dudit déplacement,
ladite au moins une partie dudit second organe (23) comprenant une première section (31s) intersectant ledit premier trajet (P-P), et ladite première section (31s) produisant un premier niveau de résistance à la déformation le long dudit premier trajet (P-P) différent du niveau de résistance à la déformation en amont de ladite première section (31s),
ledit second organe (23) comprenant une seconde section (32s) intersectant ledit premier trajet (P-P) produisant un second niveau de résistance à la déformation le long dudit premier trajet (P-P), différent du niveau de résistance à la déformation en amont de ladite première section,
**caractérisé en ce que**
ladite première section (31s) et ladite seconde section (32s) sont conçues de telle sorte qu'une force de résistance perçue (F) du dispositif d'absorption d'énergie (20) augmente et diminue de manière graduelle lorsque l'organe d'absorption d'énergie (30) traverse le second organe (23).

2. Dispositif d'absorption d'énergie de collision (20) selon la revendication 1, ledit premier trajet (P-P) s'étendant à travers et au-delà de ladite première section (30s) dudit second organe (23).

3. Dispositif d'absorption d'énergie de collision (20) selon la revendication 1 ou 2, ledit second organe (23) comprenant une paroi latérale (24) et ladite première section (30s) dudit second organe (23) étant une ouverture (31), ou un évidement, dans ladite paroi latérale (24).

4. Dispositif d'absorption d'énergie de collision (20) selon la revendication 1 ou 2, ledit second organe (23) comprenant une paroi latérale (24) et ladite première section dudit second organe (23) étant une partie d'épaisseur accrue de ladite paroi latérale (24).

5. Dispositif d'absorption d'énergie de collision (20) selon l'une quelconque des revendications précédentes, ladite surface (30f) dudit premier organe (22) étant formée par au moins un organe d'absorption d'énergie (30), ledit au moins un organe d'absorption d'énergie (30) étant adapté pour être déplacé entre une position activée, dans laquelle ledit au moins un organe d'absorption d'énergie (30) est adapté pour couper, ou déchirer, ledit second organe (23), et une position inactivée, dans laquelle ledit au moins un organe d'absorption d'énergie (30) n'a pas la capacité de déformer ledit second organe (23).

6. Dispositif d'absorption d'énergie de collision (20) selon la revendication 5, ledit dispositif d'absorption d'énergie de collision (20) étant adapté pour communiquer avec une unité de commande électronique (50), et ledit au moins un organe d'absorption d'énergie (30) étant adapté pour être déplacé entre ladite position activée et ladite position inactivée en fonction d'un signal provenant de ladite unité de commande électronique (50).

7. Dispositif d'absorption d'énergie de collision (20) selon l'une quelconque des revendications précédentes, ledit second organe (23) comprenant une pluralité d'ouvertures (31, 32, 33), ou d'évidements, agencé(e)s de manière à intersecter ledit premier trajet (P-P), produisant au moins deux niveaux différents de résistance à la déformation le long dudit premier trajet (P-P).

8. Dispositif d'absorption d'énergie de collision (20) selon l'une quelconque des revendications précédentes, ledit premier trajet (P-P) étant défini par un renfoncement ou une zone affaiblie dudit second organe (23).

9. Dispositif d'absorption d'énergie de collision (20) selon l'une quelconque des revendications précédentes, ledit premier organe (22) comprenant une seconde surface (30f) adaptée pour couper, ou déchirer, au moins une partie dudit second organe (23) le long d'un second trajet lors dudit déplacement.

10. Dispositif d'absorption d'énergie de collision (20) selon l'une quelconque des revendications précédentes, ladite première direction et ledit premier trajet (P-P) étant parallèles.

11. Structure de poutre (100) pour un véhicule (10) comprenant au moins un dispositif d'absorption d'énergie de collision (20) selon l'une quelconque des revendications précédentes.

12. Véhicule (10) comprenant la structure de poutre (100) selon la revendication 11.

13. Procédé de contrôle d'au moins une partie de l'énergie transmise à un véhicule (10) comportant un système de capteur de collision lors d'une collision au moyen d'au moins un dispositif d'absorption d'énergie de collision (20), ledit dispositif d'absorption d'énergie de collision (20) comprenant un premier organe (22) en coopération fonctionnelle avec un second organe (23),
lesdits premier et second organes (22, 23) étant adaptés pour être déplacés de manière relative l'un par rapport à l'autre lors de ladite collision dans une première direction afin d'absorber au moins une partie de ladite énergie transmise audit véhicule (10) lors de ladite collision,
au moins ledit premier organe (22) étant conçu avec une surface (30f) adaptée pour couper, ou déchirer, une première partie dudit second organe (23) le long d'un premier trajet (P-P) lors dudit déplacement, ladite surface (30f) dudit premier organe (22) étant soumise à un certain niveau de résistance à la déformation afin de réaliser ladite absorption de ladite énergie lors dudit déplacement,
ladite au moins une partie dudit second organe (23) comprenant une première section (31s) intersectant ledit premier trajet (P-P), ladite première section (31s) produisant un premier niveau de résistance à la déformation le long dudit premier trajet (P-P) différent du niveau de résistance à la déformation en amont de ladite première section (31s),
ledit second organe (23) comprenant une seconde section (32s) intersectant ledit premier trajet (P-P) produisant un second niveau de résistance à la déformation le long dudit premier trajet (P-P), différent du niveau de résistance à la déformation en amont de ladite première section (31s),
ladite première section (31s) et ladite seconde section (32s) étant conçues de telle sorte qu'une force de résistance perçue (F) du dispositif d'absorption d'énergie (20) augmente et diminue de manière graduelle lorsque l'organe d'absorption d'énergie (30) traverse le second organe (23),
ledit procédé comprenant les étapes suivantes :
- détecter une collision ou une collision imminente ;
- déterminer un niveau d'interaction entre ladite surface (30f) et ladite au moins une section (31s, 32s, 33s) et ;
- définir un niveau d'interaction entre lesdits premier et second organes (22, 23) pour obtenir un niveau approprié de résistance à la déformation le long dudit premier trajet (P-P).

14. Procédé selon la revendication 13, ladite surface (30f) dudit premier organe (22) étant disposée sur au moins un organe d'absorption d'énergie (30), ledit niveau d'interaction entre lesdits premier et second organes (22, 23) étant défini en activant ou en désactivant ledit au moins un organe d'absorption d'énergie (30, 30a).
